# EUROPEAN PATENT APPLICATION

(11) **EP 3 815 955 A1**
(43) Date of publication of application: **05.05.2021**
(21) Application number: 19827088.6
(22) Date of filing: 14.06.2019
(51) Int. Cl.: B60L 15/40, B61L 25/02

(54) **TRAVEL CONTROL DEVICE**

(30) Priority: 29.06.2018 JP 2018125021
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: FUTAGAMI, Takuya, Tokyo 105-0023 (JP); KOBAYASHI, Hiroyuki, Tokyo 105-0023 (JP); TAKAHASHI, Yusuke, Tokyo 105-0023 (JP); HORIE, Masahiro, Tokyo 105-0023 (JP); SETO, Naoto, Tokyo 105-0023 (JP); YAMASAKI, Yoshiaki, Tokyo 105-0023 (JP); KOMINATO, Sumiko, Kawasaki-shi, Kanagawa 212-0013 (JP); YOSHIDA, Kenji, Kawasaki-shi, Kanagawa 212-0013 (JP); ITO, Hiroaki, Kawasaki-shi, Kanagawa 212-0013 (JP)
(74) Representative: Hoffmann Eitle
(86) International application number: PCT/JP2019/023749
(87) International publication number: WO 2020/004087

(57) **Abstract**

A travel control device according to an embodiment includes a detection unit, a relative distance calculation unit, a speed information acquisition unit, a movement distance calculation unit, and a travel control unit. The travel control unit controls travel of a train such that the train stops at a stop position specified by an object. The control of the travel of the train is performed based on: a relative distance calculated by the relative distance calculation unit when the object is detected by the detection unit; and a movement distance calculated by the movement distance calculation unit by changing control after a predetermined condition is satisfied.

## Description

### FIELD

An embodiment of the present invention relates to a travel control device.

### BACKGROUND

Conventionally, in order to stop a train at a predetermined stop position, an object, such as a stop sign, is placed in the vicinity of a track in some cases. Various kinds of control methods have been developed to automatically stop the train at the stop position specified by the object in such cases.

### CITATION LIST

### Patent Literature

Patent Literature 1: Japanese Patent Application Laid-open No. 2018-19470

### SUMMARY OF THE INVENTION

### Problem to be Solved by the Invention

However, in such conventional techniques, there is room for improvement in, for example, accuracy of the stop position of the train. Therefore, an object of the present embodiment is to stop a train with high accuracy at a stop position specified by an object.

### Means for Solving Problem

A travel control device of an embodiment includes a detection unit, a relative distance calculation unit, a speed information acquisition unit, a movement distance calculation unit, and a travel control unit. The detection unit detects an object existing in a vicinity of a track of a train and making a stop position of the train specifiable, the object being detected from a captured image obtained by capturing an area ahead of the train by an image capturing unit provided in the train. The relative distance calculation unit calculates a relative distance between the train and the object, based on a detection result of the object by the detection unit. The speed information acquisition unit obtains speed information of the train. The movement distance calculation unit calculates a movement distance of the train, based on the speed information obtained by the speed information acquisition unit. The travel control unit controls travel of the train such that the train stops at the stop position specified by the object. The control of the travel of the train is performed based on: the relative distance calculated by the relative distance calculation unit when the object is detected by the detection unit; and the movement distance calculated by the movement distance calculation unit by changing control after a predetermined condition is satisfied.

### BRIEF DESCRIPTION OF DRAWINGS

FIG. 1 is a diagram illustrating a schematic configuration of a railway vehicle according to the present embodiment.
FIG. 2 is a block diagram illustrating a functional configuration of a travel control device of the railway vehicle according to the present embodiment.
FIG. 3 is a schematic diagram illustrating a situation where an object is out of a captured image when the train approaches the object in the present embodiment.
FIG. 4 is a schematic diagram illustrating captured images in the present embodiment.
FIG. 5 is a flowchart of travel control by the travel control device according to the present embodiment.

### DETAILED DESCRIPTION

Hereinafter, with reference to the accompanying drawings, description will be made on a railway vehicle to which a travel control device according to the present embodiment is applied.

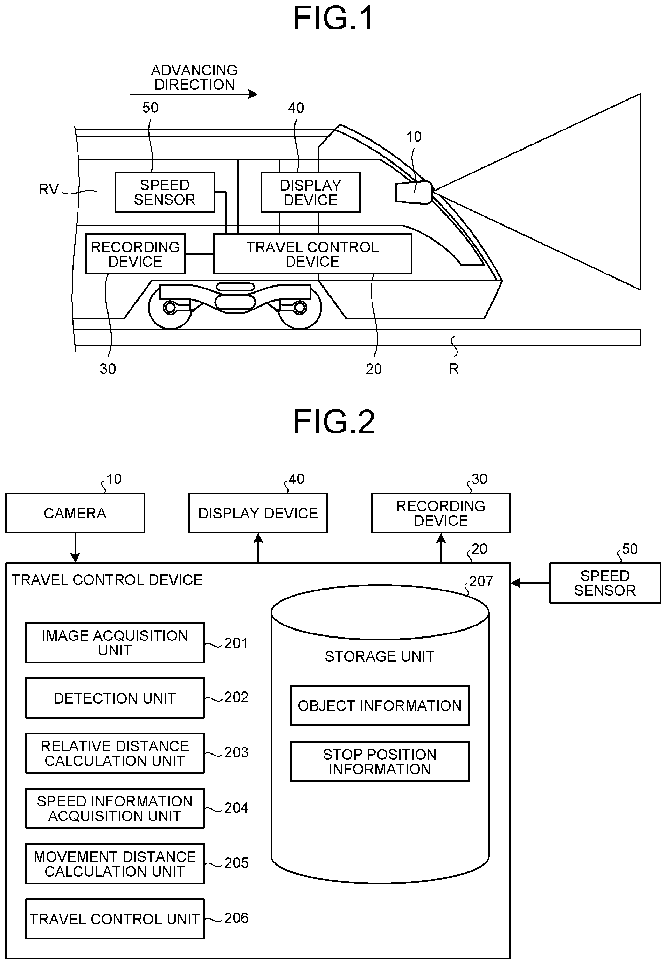

FIG. 1 is a diagram illustrating a schematic configuration of a railway vehicle RV according to the present embodiment. As illustrated in FIG. 1, the railway vehicle RV (an example of the train) according to the present embodiment includes a camera 10, a travel control device 20, a recording device 30, a display device 40, and a speed sensor 50.

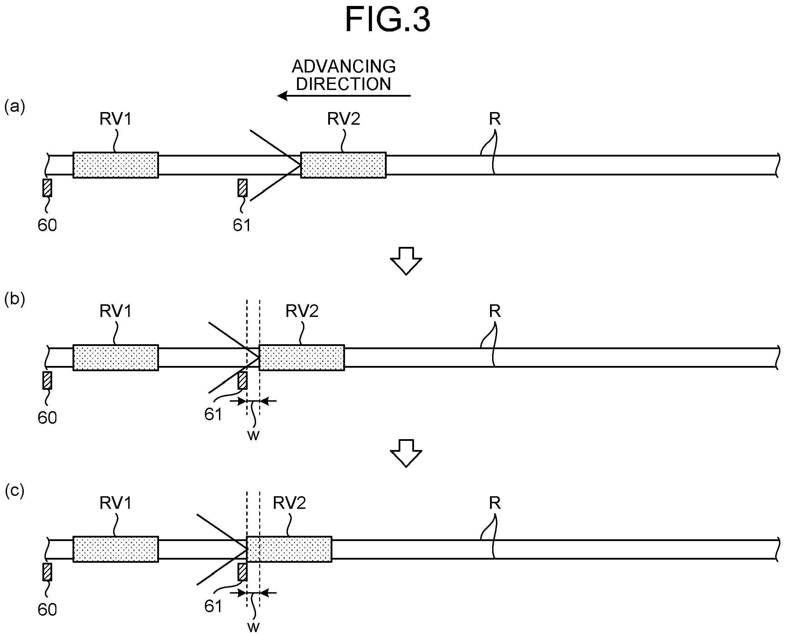

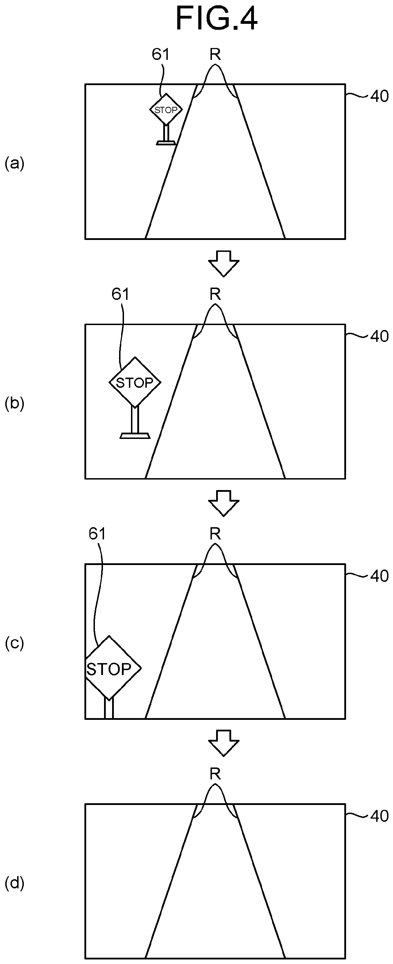

The camera 10 is provided in the railway vehicle RV and is an example of an image capturing unit capable of capturing an area ahead (in an advancing direction) of the railway vehicle RV. Here, an object (objects 60, 61 in FIG. 3, or the object 61 in FIG. 4), which is able to specify a stop position of the railway vehicle RV, exists in the vicinity of a track in the advancing direction of the railway vehicle RV. It should be noted that the track collectively refers to structures (rails, ties, etc.) on a subgrade of a track of the train. The camera 10 is, for example, a stereo camera capable of determining a distance to the object.

The travel control device 20 is a device that controls travel of the railway vehicle RV (details will be described later). The recording device 30 is a device that records various kinds of information used for travel control of the railway vehicle RV. The display device 40 is a device that displays various kinds of information and is, for example, a liquid crystal display (LCD). The speed sensor 50 is means for sensing a travel speed of the railway vehicle RV and is, for example, a wheel speed sensor to measure and output a rotational speed of wheels (an example of the speed information) of the railway vehicle RV.

FIG. 2 is a block diagram illustrating a functional configuration of the travel control device 20 of the railway vehicle RV according to the present embodiment. As illustrated in FIG. 2, the travel control device 20 includes an image acquisition unit 201, a detection unit 202, a relative distance calculation unit 203, a speed information acquisition unit 204, a movement distance calculation unit 205, a travel control unit 206, and a storage unit 207.

In the present embodiment, part of or all the components 201 to 206 are implemented when a central processing unit (CPU) and other processors of the railway vehicle RV execute software stored in the storage unit 207.

Alternatively, part of or all the components 201 to 206 may be implemented by hardware, which is a circuit board such as a large scale integration (LSI), an application specific integrated circuit (ASIC), and a field programmable gate array (FPGA). Alternatively, the components 201 to 206 may be implemented by collaboration between the software executed by the processors and the hardware.

The storage unit 207 includes nonvolatile recording media such as a read only memory (ROM), a flash memory, a hard disk drive (HDD), and an SD card, and volatile recording media such as a random access memory (RAM) and a register. The storage unit 207 stores various kinds of information such as computer programs executed by the processors of the railway vehicle RV (details will be described later).

The image acquisition unit 201 obtains a captured image from the camera 10. For example, when the camera 10 is a stereo camera, the image acquisition unit 201 obtains a plurality of captured images by capturing areas ahead of the railway vehicle RV from different viewpoints. The image acquisition unit 201 successively obtains the captured images from the camera 10 in a preset cycle (such as a frame rate of the camera 10).

The detection unit 202 detects the object in the captured images obtained by the image acquisition unit 201. More specifically, the object is, for example, a stop sign placed in the vicinity of the track at a station or a train shed.

The relative distance calculation unit 203 calculates a relative distance between the railway vehicle RV and the object, based on a detection result of the object by the detection unit 202. When the camera 10 is a stereo camera, the relative distance calculation unit 203 calculates the relative distance between the railway vehicle RV and the object, based on parallax of the object in the captured images obtained by image capturing with the camera 10. The relative distance calculation unit 203 successively calculates the relative distance each time the detection unit 202 detects the object.

Alternatively, the relative distance calculation unit 203 may calculate the relative distance based on a dimension of the object in the captured images. Specifically, the storage unit 207 stores object information including information indicative of an actual dimension of the object detected by the detection unit 202. Then, the relative distance calculation unit 203 calculates the relative distance based on the actual dimension of the object (a known object dimension) represented by the object information stored in the storage unit 207 and the dimension of the object in the captured images.

The speed information acquisition unit 204 obtains, from the speed sensor 50, speed information of the railway vehicle RV.

The movement distance calculation unit 205 calculates a movement distance of the railway vehicle RV, based on the speed information obtained by the speed information acquisition unit 204.

The travel control unit 206 controls travel of the railway vehicle RV such that the railway vehicle RV stops at the stop position specified by the object. The control of the travel of the railway vehicle RV is performed based on: the relative distance calculated by the relative distance calculation unit 203 when the object is detected by the detection unit 202; and the movement distance calculated by the movement distance calculation unit 205 by changing control after a predetermined condition has been satisfied.

The predetermined condition is, for example, any one among conditions (Condition 1) to (Condition 4) described below.
(Condition 1) The object has been out of a captured image.
(Condition 2) The object has moved to a predetermined position (such as a lower left position as in FIG. 3(c)) in a captured image.
(Condition 3) The object has become a predetermined size (such as a size of the object 61 in FIG. 3(c)) or larger in a captured image.
(Condition 4) The relative distance calculated by the relative distance calculation unit 203 has become a second threshold (30 m, for example) or smaller.

It should be noted that, for example, for each attribute of the railway vehicle RV (a model, the number of cars, a group of the railway vehicle RV), a corresponding object may be different. In such cases, the stop position information stored in the storage unit 207 is, for example, information including combinations of a plurality of the attributes of the railway vehicle RV with corresponding objects. By referring to the stop position information stored in the storage unit 207, the travel control unit 206 is able to specify the corresponding objects in accordance with the attributes of the railway vehicle RV and control travel of the railway vehicle RV.

Next, referring to FIG. 3 and FIG. 4, description will be made on that the object leaves a captured image when the railway vehicle RV approaches the object 60, 61. FIG. 3 is a schematic diagram illustrating that the object leaves the captured image when the railway vehicle RV approaches the object 60, 61 in the present embodiment. FIG. 4 is a schematic diagram illustrating captured images in the present embodiment.

First, as illustrated in FIG. 3(a), when a railway vehicle RV2 traveling on rails R is away from the object 61 by, for example, 30 m or farther, the object 61 is captured within an image captured by the camera 10 (FIG. 4(a)). It should be noted that a railway vehicle RV1 stopping near the object 60 exists ahead of the railway vehicle RV2.

Thereafter, as the railway vehicle RV2 approaches the object 61, the object 61 gradually increases in size in captured images captured by the camera 10 (FIGS. 4(b) and (c)).

Thereafter, as illustrated in FIG. 3(b), when a relative distance (distance w) between the railway vehicle RV2 and the object 61 becomes, for example 30 m or smaller, the object 61 has been out of a captured image captured by the camera 10 (FIG. 4(d)).

Thereafter, as illustrated in FIG. 3(c), the railway vehicle RV2 stops at a time when the front end has reached a side of the object 61.

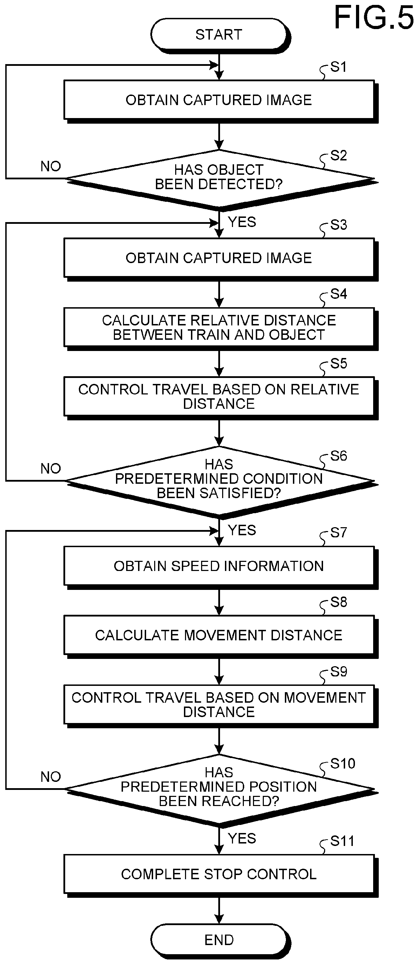

Next, referring to FIG. 5, travel control by the travel control device 20 will be described. FIG. 5 is a flowchart of the travel control by the travel control device 20 according to the present embodiment. First, at step S1, the image acquisition unit 201 obtains a captured image from the camera 10.

Next, at step S2, the detection unit 202 determines whether an object has been detected in the captured image obtained at step S1. In the case of "Yes", the travel control proceeds to step S2, and, in the case of "No", the travel control returns to step S1.

At step S3, the image acquisition unit 201 obtains a captured image from the camera 10. Next, at step S4, the relative distance calculation unit 203 calculates a relative distance between the railway vehicle RV and the object, based on the captured image obtained at step S3.

Next, at step S5, the travel control unit 206 controls travel of the railway vehicle RV, based on the relative distance calculated at step S4. That is, the travel control unit 206 controls travel of the railway vehicle RV so as to slow a speed as the railway vehicle RV approaches the object.

Next, at step S6, the travel control unit 206 determines whether a predetermined condition (for example, one of Conditions 1 to 4 described above) has been satisfied. In the case of "Yes", the travel control proceeds to step S7, and, in the case of "No", the travel control returns to step S3.

At step S7, the speed information acquisition unit 204 obtains, from the speed sensor 50, speed information of the railway vehicle RV.

Next, at step S8, the movement distance calculation unit 205 calculates a movement distance of the railway vehicle RV, based on the speed information obtained at step S7.

Next, at step S9, in order to stop the railway vehicle RV at the stop position specified by the object, the travel control unit 206 changes control and controls travel of the railway vehicle RV based on the movement distance calculated at step S8. That is, the travel control unit 206 controls travel of the railway vehicle RV so as to slow the speed as the railway vehicle RV approaches the object.

Next, at step S10, the travel control unit 206 determines whether the railway vehicle RV has reached a predetermined position, based on, for example, the movement distance calculated at step S8. In the case of "Yes", the travel control proceeds to step S11, and, in the case of "No", the travel control returns to step S7.

At step S11, the travel control unit 206 performs complete stop control of the railway vehicle RV.

In this manner, the travel control device 20 according to the present embodiment is capable of stopping the railway vehicle RV with high accuracy at the stop position specified by the object (for example, at an immediate side of the object). Functions and effects of the travel control device 20 according to the present embodiment will be described as compared with a conventional technique. In the conventional technique, for example, there is a control method of calculating a current position of a train with a global positioning system (GPS) or a global navigation satellite system (GNSS) so as to stop the train at a stop position specified by an object. Such a control method is disadvantageous in that an error of the stop position is as large as approximately 2 m. This control method is also disadvantageous in that it is necessary to prepare and store, as data, absolute position information of the object and speed control patterns in accordance with absolute positions of the railway vehicle, thereby increasing the cost.

In contrast, the travel control device 20 according to the present embodiment makes an error of the stop position significantly smaller than approximately 2 m (as small as several tens of cm, for example). Moreover, there is no need to prepare and store, as data, absolute position information of the object and speed control patterns in accordance with absolute positions of the railway vehicle, which can implement cost reduction.

In the conventional technique, for example, there is a control method of capturing an image of the object using a camera provided in the front end of the train and calculating a relative distance between the train and the object by image recognition so as to stop the train at the stop position. Such a control method is disadvantageous in that when the train approaches the object to some extent (30 m, for example), the object leaves a captured image, which may hinder subsequent stop control.

In contrast, with the travel control device 20 according to the present embodiment, after the object is detected in the captured image and until the predetermined condition is satisfied, travel of the railway vehicle RV is first controlled based on the relative distance between the railway vehicle RV and the object that has been calculated based on the captured image. After the predetermined condition (for example, one of the above-described conditions 1 to 4) has been satisfied, travel of the railway vehicle RV is controlled based on the movement distance calculated based on the speed information. Thus, when the railway vehicle RV approaches the object to some extent (30 m, for example) and even though the object has left the captured image, accuracy of the stop position of the railway vehicle RV is not lowered.

### (Modifications)

Next, modifications of the travel control device 20 will be described. Instead of obtaining the speed information from the speed sensor 50, the speed information acquisition unit 204 may obtain (calculate) speed information based on acceleration information obtained from an acceleration sensor (not illustrated) and information on a distance to the object that is obtained from a distance measurement device (not illustrated).

As illustrated in FIG. 3, in a case where a plurality of the objects such as the objects 60, 61 exist, when no other railway vehicle (the railway vehicle RV1) exists ahead, the railway vehicle RV2 may simply perform stop control based on the furthest object 60, and when a second railway vehicle (the railway vehicle RV1) exists ahead, the railway vehicle RV2 may simply perform stop control based on the object 61 before the other railway vehicle. In such a case, the detection unit 202 detects the second train that exists ahead of the railway vehicle RV2 in a captured image. When the detection unit 202 detects the second train existing ahead of the railway vehicle RV2, the travel control unit 206 controls travel of the railway vehicle RV to stop the railway vehicle RV based on the object in a range that can keep a relative distance to the second train equal to or larger than a first threshold.

This makes it possible to flexibly perform stop control of the railway vehicle RV depending on whether a second railway vehicle exists ahead.

It should be noted that a computer program executed by the travel control device 20 according to the present embodiment is provided in a form incorporated in a component such as the ROM in advance. The computer program executed by the travel control device 20 according to the present embodiment may be provided in a file of an installable format or an executable format that is recorded on a recording medium, such as a CD-ROM, a flexible disk (FD), a CD-R, and a digital versatile disc (DVD), which can be read by computers.

Furthermore, the computer program executed by the travel control device 20 according to the present embodiment may be provided by storing the computer program in a computer connected to a network such as the Internet and downloading the computer program via the network. The computer program executed by the travel control device 20 according to the present embodiment may be provided or distributed via a network such as the Internet.

The computer program executed by the travel control device 20 according to the present embodiment has a module configuration including the above-described components 201 to 206. As actual hardware, the CPU reads the computer program from the ROM and executes the computer program so that the components are loaded on a main storage device, and that the components 201 to 206 are generated on the main storage device.

The embodiment of the present invention and the modifications that have been described heretofore are provided as examples and not intended to limit the scope of the invention. The novel embodiment and the modifications are implementable in other various modes and can be omitted, replaced, and changed in various manners without departing from the subject matter of the invention. The embodiment and the modifications are included in the scope and the subject matter of the invention, and also included in inventions recited in the claims and in their equal scope.

## Claims

1. A travel control device comprising:
a detection unit for detecting an object existing in a vicinity of a track of a train and making a stop position of the train specifiable, the object being detected from a captured image obtained by capturing an area ahead of the train by an image capturing unit provided in the train;
a relative distance calculation unit for calculating a relative distance between the train and the object, based on a detection result of the object by the detection unit;
a speed information acquisition unit for obtaining speed information of the train;
a movement distance calculation unit for calculating a movement distance of the train, based on the speed information obtained by the speed information acquisition unit; and
a travel control unit for controlling travel of the train such that the train stops at the stop position specified by the object, wherein the control of the travel of the train is performed based on
the relative distance calculated by the relative distance calculation unit when the object is detected by the detection unit, and
the movement distance calculated by the movement distance calculation unit by changing control after a predetermined condition is satisfied.

2. The travel control device according to claim 1, wherein the speed information acquisition unit obtains the speed information based on at least one of: a rotational speed of wheels of the train obtained from a wheel speed sensor; acceleration information obtained from an acceleration sensor; and information on a distance to the object obtained by a distance measurement device.

3. The travel control device according to claim 1, wherein
the detection unit detects a second train existing ahead of the train in the captured image, and,
the travel control unit controls, when the detection unit detects a second train existing ahead of the train, travel of the train such that the train stops in a state that a relative distance to the second train is equal to or larger than a first threshold.

4. The travel control device according to claim 1, wherein
the image capturing unit is a stereo camera, and
the relative distance calculation unit calculates the relative distance between the train and the object, based on parallax of the object in a plurality of the captured images obtained by image capturing using the stereo camera.

5. The travel control device according to claim 1, wherein the predetermined condition is one of conditions that:
the object has been out of the captured image;
the object has moved to a predetermined position in the captured image;
the object has become a predetermined size or larger in the captured image; and
the relative distance calculated by the relative distance calculation unit has become a second threshold or smaller.
